# EUROPEAN PATENT SPECIFICATION

(11) **EP 3 870 885 B1**
(45) Date of publication and mention of the grant of the patent: **23.08.2023**
(21) Application number: 19831927.9
(22) Date of filing: 25.10.2019
(51) Int. Cl.: F16K 31/06, F16K 37/00

(54) **AN APPARATUS FOR INDICATING ACTUATION OR DE-ACTUATION OF A MAGNETICALLY ACTUATED DEVICE**
VORRICHTUNG ZUR ANZEIGE DER AKTIVIERUNG ODER DEAKTIVIERUNG EINER MAGNETISCH AKTIVIERTEN VORRICHTUNG
APPAREIL PERMETTANT D'INDIQUER L'ACTIVATION OU LA DÉSACTIVATION D'UN DISPOSITIF À ACTIVATION MAGNÉTIQUE

(30) Priority: 26.10.2018 IN 201821040596
(43) Date of publication of application: 01.09.2021
(73) Proprietor: ASCO CONTROLS B.V., 6718 WX Ede (NL)
(72) Inventor: CHOPADE, Manoj Baliram, 411033 PUNE (IN)
(74) Representative: EP&C
(86) International application number: PCT/NL2019/050704
(87) International publication number: WO 2020/085910

(56) References cited:
- DE-A1- 19 518 304
- DE-A1-102012 109 094
- US-A- 5 144 977

## Description

### FIELD

The present disclosure relates to the field of indicating apparatuses for magnetically actuated devices.

### BACKGROUND

The background information herein below relates to the present disclosure but is not necessarily prior art.

A magnetically actuated device is a device which is actuated using a magnetic force of attraction or repulsion. Such devices may include a magnetically actuated valve or switch. A magnetically actuated valve is typically used in applications where fluid flow is needed to be allowed or restricted when required. The valve is installed on a fluid line, for example pipes. The actuation of the valve either allows the fluid flow or restricts the fluid flow therethrough. The valve is actuated by a magnetic actuation unit having a solenoid, a core, and a stem. The solenoid includes a plugnut and an electric coil circumscribing the plugnut. The electric coil, when energized, induces magnetic field in the plugnut.

The core is arranged coaxial with the plugnut. The core is displaced towards the plugnut when the plugnut is magnetized by the electric coil. Further, the stem is connected to the core, and is displaceable with the core. When the core is displaced towards the plugnut, the stem also gets displaced along with the core. The displacement of the stem towards the plugnut actuates the valve to either allow the fluid flow or restrict the fluid flow through the valve depending upon the type of the valve (normally closed valve or normally open valve).

However, as the core and the stem are disposed in a thick metal casing, it is difficult to identify whether the device and the actuation unit are actuated or not merely by manually checking the device. Further, the health of the device can be diagnosed only when the device is not functional.

One of the conventional methods for identifying actuation of such devices involves the use of non-contact type transducers. In this method, a magnetic stem is connected to the stem of the actuation unit. However, addition of another such stem requires more pulling force to pull the stem and the core, and adversely affects the device performance.

An apparatus for indicating actuation or de-actuation of a magnetically actuated device according to the preamble of claim 1 is disclosed in DE-195.18.304.

Therefore, there is felt a need of an apparatus that alleviates the aforementioned drawbacks, and indicates an actuation of a magnetically actuated device.

### OBJECTS

Some of the objects of the present disclosure, which at least one embodiment herein satisfies, are as follows:
An object of the present disclosure is to provide an apparatus for indicating actuation of a magnetically actuated device.

Another object of the present disclosure is to provide an apparatus that does not affect device performance.

Yet another object of the present disclosure is to provide an apparatus that has frictionless operation.

Yet another object of the present disclosure is to provide an apparatus that provides visual indications for indicating actuation of a magnetically actuated device.

Yet another object of the present disclosure is to provide an apparatus which is a non-contact type apparatus.

Yet another object of the present disclosure is to provide an apparatus that provides amplified visual indication about actuation of a device.

Other objects and advantages of the present disclosure will be more apparent from the following description, which is not intended to limit the scope of the present disclosure.

### SUMMARY

The present invention aims to achieve one or more of the above objects, or to at least provide a usable alternative.

This aim is achieved by the apparatus for indicating actuation or de-actuation of a magnetically actuated device as claimed in claim 1.

The present disclosure envisages an indicating apparatus for indicating actuation or de-actuation of a magnetically actuated device. The device is actuated by a magnetic actuation unit comprising a controllably displaceable stem, a core, a plugnut, and an electric coil. The stem is configured to actuate or de-actuate the device. The core is connected to the stem. The plugnut cooperates with the core. The electric coil is configured to induce a magnetic field in the plugnut to control the displacement of the stem. The indicating apparatus comprises an indicating magnet and an indication unit. The indicating magnet is associated with the plugnut, and is configured to be displaced in relation to the movement of the core. The indication unit is configured to be actuated by the displacement of the indicating magnet to indicate the actuation or de-actuation of the actuation unit and the device. The indicating magnet is configured to, when the actuation unit is actuated, and the electric coil induces the magnetic field in the plugnut, at the same time, have the polarity of a side of the indicating magnet being the same as the polarity induced in a side of the plugnut facing the side of the indicating magnet, due to which repulsive force is developed between the plugnut and the indicating magnet, which results in repulsion of the indicating magnet by the plugnut.

The indicating apparatus further may comprise a guiding arrangement configured to guide the indicating magnet when the indicating magnet is displaced. Thus the indicating magnet can be suitable guided, in particular in a direction that is coaxial with a center axis of the plugnut and core.

In a preferred embodiment the guiding arrangement may include a container mounted on the plugnut, and the indicating magnet then may be disposed in this container. The indicating magnet preferably is movably guided coaxially with the plugnut and core. The container then may form a cylinder housing inside which the indicating magnet can be movably guided as a piston. Furthermore the container forms a protective shield for the indicating magnet displacements, such that its proper operation can be guaranteed.

In addition thereto the container may have a hole configured thereon. This prevents build-up of over- and under-pressures inside the container during movements of the indicating magnet therein. Also it may offer visibility onto the magnet from outside the container and/or provide an opening through which an element that is attached to the magnet can project towards outside the container and/or provide a mounting position for a sensor to be connected to.

In addition thereto or in the alternative the container may have a transparent body. Thus any displacement of the magnet itself may form a visual indication for users of the actuation or de-actuation of the actuation unit and the device.

In addition thereto or in the alternative a biasing member can be provided attached to an operative inner surface of the container and the indicating magnet. The biasing member advantageously makes it possible for the invention to have the magnet return to its de-actuated starting position independent of gravitational forces, and to thus be able to have the indicating magnet co-move with core displacements in any orientation of the apparatus.

In an embodiment the magnet can be a permanent magnet that is positioned such that its side that faces the plugnut has same polarity as that side of the plugnut when a magnetic field is induced in the plugnut. This is an economic solution since it does not require any kind of energising of the indicating magnet.

In the alternative the indicating magnet can be an electromagnet. This may give more control options for the aimed displacement ratios of the indicating magnet and/or makes it possible to switch the indicating magnet entirely off when not used. With this the indicating apparatus may include an electric coil configured to induce magnetic field in the electromagnet when energized, such that a side of the electromagnet has same polarity as the polarity of a side of the plugnut facing the side of the electromagnet when both the plugnut and the electromagnet are energized by their own dedicated electric coils.

In a further embodiment the indication unit may include a rigid rod attached to the indicating magnet, wherein the rigid rod is configured to be displaced with the indicating magnet to indicate actuation or de-actuation of the actuation unit and the device. This provides for a simple and effective indication.

In a further embodiment a gap can be defined between the magnet and the plugnut. Such a gap can be a breakeven point of attraction and repulsive force. The gap on the one hand can help to prevent the indicating magnet to get attached to the plugnut in its rest position. When the coil of the indicating apparatus then gets energized, a direct repulsive force may get to act on the indicating magnet without having to first overcome its own attraction force. In that way the gap is able to facilitate quick repulsion, and almost immediate indication of the actuation or de-actuation of the actuation unit and the device. The gap may for example lie between 0,5-5 mm.

In a further embodiment the indication unit may include a sensor that is configured to sense displacement of the magnet, wherein the sensor is further configured to generate and transmit a sensed signal corresponding to a sensed displacement of the indicating magnet, and a controller that is configured to receive this sensed signal, and generate an actuation signal to energize a lamp. The sensor for example can be a Hall sensor. Other sensors, like (magnetic actuated) proximity sensors, reed switches, etc. are however also possible.

In a further embodiment the indicating magnet and the core can be arranged at opposite sides of the plugnut. This prevents the indicating apparatus and the device to stand in the way of each other and thus may aid compact and solid construction.

In a further embodiment the indicating magnet can be selected such that a gauss value or a magnetic strength of the indicating magnet is lesser than that of the plugnut when the electric coil is energized, such that displacement of the indicating magnet may be more than the displacement of the core, more specifically, such that the distance travelled by the indicating magnet can even be more than the distance travelled by the core towards the plugnut. Thus even very small strokes of the core, like for example in a range of 0,4-2 mm in a direct acting solenoid valve, can efficiently be multiplied by the corresponding indicating magnet displacement and thus also clearly be sensed and/or indicated by the indication unit.

In a further embodiment the apparatus may include a connecting member that is configured to couple the indicating magnet and the core. This connecting member then for example may extend freely movable in the axial direction through the plugnut. Advantageously, a repulsive force between the indicating magnet and the plugnut and an attraction force between the core and the plugnut then are in the same direction when the coil of the actuation unit is energized. This then results into an enhanced pulling force, which may help to overcome any frictional forces and which may help the core to instantly move (upwards) towards the plugnut, and for the indicating magnet to give a guaranteed positive one-to-one feedback of the core movements.

Further preferred embodiments are stated in the dependent subclaims.

The invention also relates to an assembly of a magnetically actuated device, a magnetic actuation unit for actuating this device, and an apparatus for indicating actuation or de-actuation of the magnetically actuated device, as well as to a method for indicating actuation or de-actuation of the magnetically actuated device of such an assembly.

### BRIEF DESCRIPTION OF THE ACCOMPANYING DRAWING

An apparatus for indicating actuation of a magnetically actuated device, of the present disclosure, will now be described with the help of the accompanying drawings, in which:
- Figure 1 illustrates a schematic view of an apparatus, in accordance with one embodiment of the present disclosure, when an actuation unit is in a de-actuated state;
- Figure 2 illustrates a schematic view of the apparatus of Figure 1, when the actuation unit is in an actuated state;
- Figure 3 illustrates a schematic view of the apparatus, in accordance with another embodiment of the present disclosure, when the actuation unit is in a de-actuated state;
- Figure 4 illustrates a schematic view of the apparatus of Figure 3, when the actuation unit is in an actuated state;
- Figure 5 illustrates a schematic view of the apparatus, in accordance with yet another embodiment of the present disclosure, when the actuation unit is in an actuated state;
- Figure 6 illustrates a schematic view of the apparatus, in accordance with still another embodiment of the present disclosure, when the actuation unit is in an actuated state;
- Figure 7 illustrates a schematic view of the apparatus, in accordance with still another embodiment of the present disclosure, when the actuation unit is in an actuated state;
- Figure 8 illustrates a schematic view of the apparatus, in accordance with still another embodiment of the present disclosure, when the actuation unit is in a de-actuated state; and
- Figure 9 illustrates a more detailed view of the apparatus, in accordance with still another embodiment of the present disclosure, when the actuation unit is in an actuated state.

### DETAILED DESCRIPTION

Embodiments, of the present disclosure, will now be described with reference to the accompanying drawing.

Embodiments are provided so as to thoroughly and fully convey the scope of the present disclosure to the person skilled in the art. Numerous details, are set forth, relating to specific components, and methods, to provide a complete understanding of embodiments of the present disclosure. It will be apparent to the person skilled in the art that the details provided in the embodiments should not be construed to limit the scope of the present disclosure. In some embodiments, well-known processes, well-known apparatus structures, and well-known techniques are not described in detail.

The terminology used, in the present disclosure, is only for the purpose of explaining a particular embodiment and such terminology shall not be considered to limit the scope of the present disclosure. As used in the present disclosure, the forms "a", "an", and "the" may be intended to include the plural forms as well, unless the context clearly suggests otherwise. The terms "comprises", "comprising", "including", and "having" are open ended transitional phrases and therefore specify the presence of stated features, integers, steps, operations, elements, modules, units and/or components, but do not forbid the presence or addition of one or more other features, integers, steps, operations, elements, components, and/or groups thereof. The particular order of steps disclosed in the method and process of the present disclosure is not to be construed as necessarily requiring their performance as described or illustrated. It is also to be understood that additional or alternative steps may be employed.

When an element is referred to as being "mounted on", "engaged to", "connected to", or "coupled to" another element, it may be directly on, engaged, connected or coupled to the other element. As used herein, the term "and/or" includes any and all combinations of one or more of the associated listed elements.

The terms first, second, third, etc., should not be construed to limit the scope of the present disclosure as the aforementioned terms may be only used to distinguish one element, component, region, layer or section from another component, region, layer or section. Terms such as first, second, third etc., when used herein do not imply a specific sequence or order unless clearly suggested by the present disclosure.

Terms such as "inner", "outer", "beneath", "below", "lower", "above", "upper", and the like, may be used in the present disclosure to describe relationships between different elements as depicted from the figures.

The present disclosure envisages an apparatus that indicates (de-)actuation of a magnetically actuated device. The apparatus has simple construction, is easy to operate, and provides visual indications when the valve is actuated.

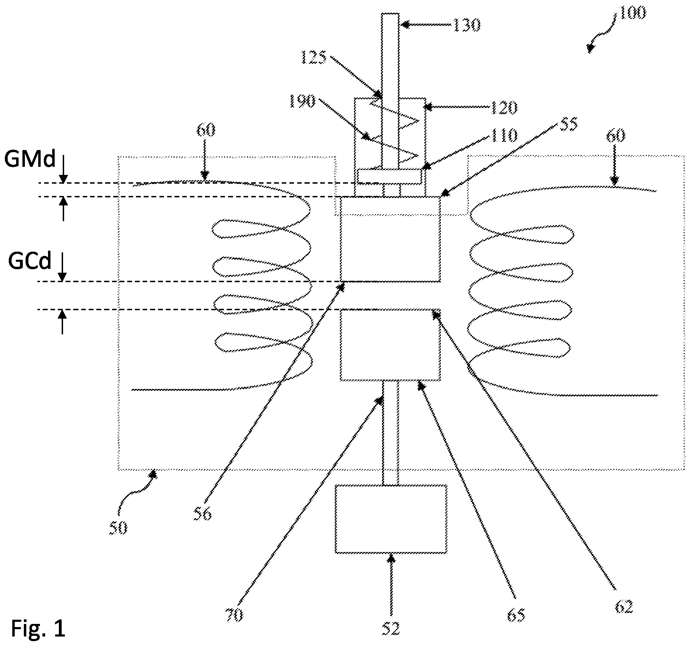

The apparatus of the present disclosure is now described with reference to Figure 1 through Figure 9.

Referring to Figure 1 through Figure 9, an apparatus 100, in accordance with present disclosure, is shown. The apparatus 100 is mounted on an actuation unit 50 configured for actuating a device 52. The device 52 is a magnetically actuated device. The device 52 can be a magnetically actuated valve or a magnetically actuated switch. Although the present disclosure is described with reference to a magnetically actuated valve, any other magnetically actuated device is well within the scope and ambit of the present disclosure. Further, the apparatus 100 can be used to identify actuation of any magnetically actuated device. The use of the apparatus 100 to identify actuation of the device 52, which is a valve, in the present disclosure, is only for exemplary purposes, and it does not limit the scope of the present disclosure.

The device 52 is actuated by an actuation unit 50. The actuation unit 50 comprises a plugnut 55, an electric coil 60, a core 65, and a controllably displaceable stem 70. The device 52, or the valve 52, is connected to the stem 70. The stem 70 is configured to actuate or de-actuate the valve 52. The electric coil 60 circumscribes the plugnut 55. The electric coil 60 is configured to induce magnetic field in the plugnut 55 when the electric coil 60 is energized. The plugnut 55 cooperates with the core 65. The core 65 is arranged coaxial with the plugnut 55. The core 65 is disposed below the plugnut 55 such that an initial gap GCd is defined between the core 65 and the plugnut 55 in the de-actuated state. The core 65 is configured to be displaced towards the plugnut 55 when the magnetic field is induced in the plugnut 55 by the electric coil 60. This decreases the initial gap GCd in the de-actuated state towards a smaller gap GCa in the actuated state. More specifically, when both the plugnut 55 and the core 65 are magnetized by the energized electric coil 60, opposite polarities (either N - S poles or S - N poles) are induced in a side 56 of the plugnut 55 and a side 62 of the core 65 facing each other. The stem 70 is connected to the core 65, and extends therefrom. The stem 70 and the core 65 can be formed integrally. The stem 70 is configured to be displaced along with the core 65. The stem 70 is configured such that the displacement of the stem 70 actuates the valve 52 or de-actuates the valve 52 to restrict the fluid flow (if the valve 52 is a normally open valve) or allow the fluid flow (if the valve 52 is a normally closed valve) through the valve 52. The valve 52 and the actuation unit 50 are typically mounted on a fluid line (not specifically shown in figures), for example pipes, through which the fluid flow is to be allowed or restricted when required.

The apparatus 100 comprises a magnet 110, 150, a guiding arrangement 120, and an indication unit 130, 155.

The magnet 110, 150 is associated with the plugnut 55, and configured to be displaced in relation to the movement of the core 65 and the stem 70. More specifically, the magnet 110, 150 is configured to be repelled by the plugnut 55 when the magnetic field is induced in the plugnut 55. The magnet 110, 150 can have any suitable shape. In an embodiment, the magnet 110, 150 is a ring type or a disc type magnet.

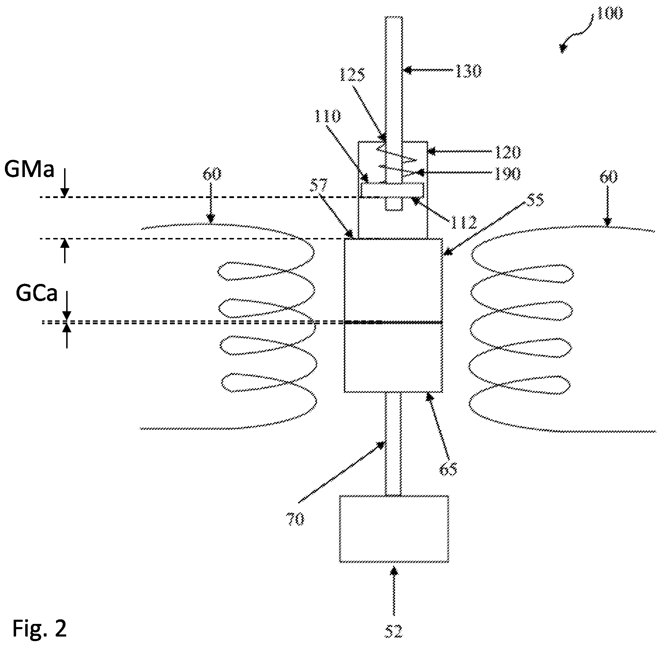

In an embodiment, as shown in Figure 1, Figure 2 and Figure 5, the magnet 110 is a permanent magnet. The permanent magnet 110 is disposed on the plugnut 55 such that an initial gap GMd is defined between the magnet 110 and the plugnut 55 in the de-actuated state. The initial gap GMd in the de-actuated state facilitates quick repulsion of the magnet 110 from the plugnut 55. The magnetic field induced in the plugnut 55 is such that a side 112 of the permanent magnet 110 has same polarity (either N - N pole or S - S pole) as the polarity of a side 57 of the plugnut 55 facing the side 112 of the permanent magnet 110. Due to same polarities, the magnet 110 is repelled by the plugnut 55 (as shown in Figure 2) due to force of repulsion developed between them. This increases the initial gap GMd between the electromagnet 150 and the plugnut 55 in the de-actuated state towards the larger gap GMa between the electromagnet 150 and the plugnut 55 in the actuated state. This increase is related to the simultaneous decrease of the initial gap GCd between the core 65 and the plugnut 55 in the de-actuated state towards the smaller gap GCa between the core 65 and the plugnut 55 in the actuated state.

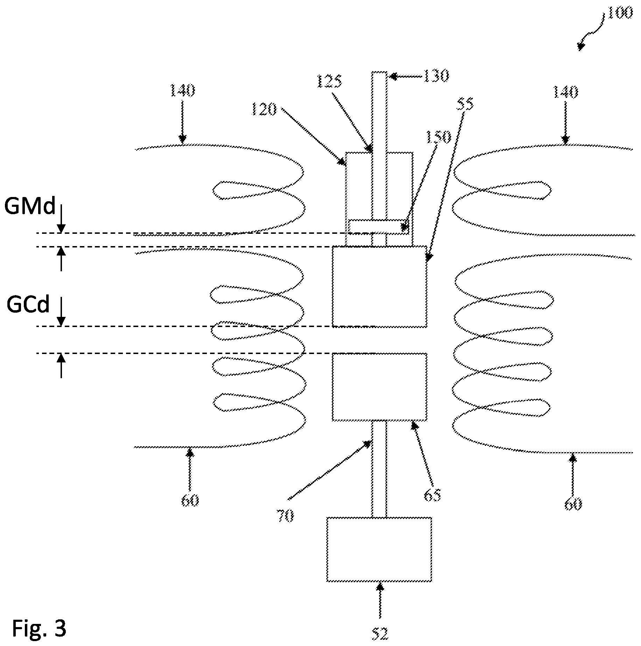

In another embodiment, as shown in Figure 3, Figure 4, and Figure 6, the magnet 150 is an electromagnet. The apparatus 100 includes an electric coil 140 circumscribing the electromagnet 150. The electromagnet 150 is disposed on the plugnut 55 such that an initial gap GMd is defined between the magnet 150 and the plugnut 55 in the de-actuated state. The gap GMd in the de-actuated state facilitates quick repulsion of the magnet 150 from the plugnut 55.

The initial gap GMd in the de-actuated state is skilfully defined considering the material and magnetic strength of magnet 110, 150, application requirement, and size of the valve 52.

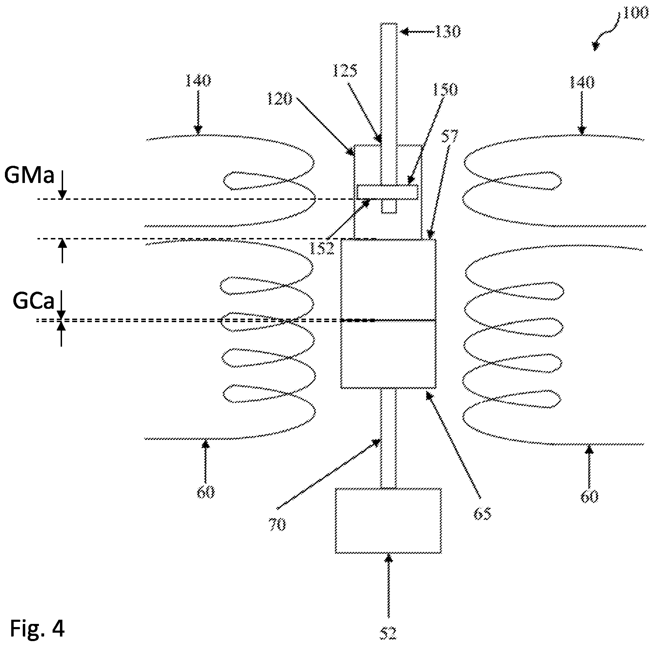

When energized, the electric coil 140 is configured to induce magnetic field in the electromagnet 150 such that a side 152 of the electromagnet 150 has the same polarity (either N - N pole or S - S pole) as the polarity of the side 57 of the plugnut 55 facing the side 152 of the electromagnet 150. Thus, once the magnetic field is induced, the electromagnet 150 acts in a similar fashion as that of the permanent magnet 110, and is repelled by the plugnut 55 (as shown in Figure 4) due to repulsive force developed between them when the plugnut 55 is energized. This increases the initial gap GMd between the electromagnet 150 and the plugnut 55 in the de-actuated state towards the larger gap GMa between the electromagnet 150 and the plugnut 55 in the actuated state. This increase is related to the simultaneous decrease of the initial gap GCd between the core 65 and the plugnut 55 in the de-actuated state towards the smaller gap GCa between the core 65 and the plugnut 55 in the actuated state.

The magnet 110, 150 is selected such that the gauss value or the magnetic strength of the magnet 110, 150 is lesser than that of the plugnut 55 when the electric coil 60 is energized. Thus, the displacement Dm of the magnet 110, 150 when it gets repelled by the magnetized plugnut 55 from its initial de-actuated position towards its actuated position, is more than the displacement Dc of the core 65 when it gets attracted by the magnetized plugnut 55 from its initial de-actuated position towards its actuated position. More specifically, the distance travelled by the magnet 110, 150 away from the plugnut 55, which equals GMa-GMd, is more than the distance travelled by the core 65 towards the plugnut 55, which equals GCd-GCa. Thus, for a very small travel of the core 65, the magnet 110, 150 travels multifold. This allows identification of the actuation of the device 52 even when the displacement of the core 65 is small/not significant. More specifically, the apparatus 100 provides controlled amplified visual indication signal for easy and quick identification of the actuation of the device 52.

The magnet 110, 150 and the core 65 are arranged at the opposite sides of the plugnut 55.

The guiding arrangement 120 is configured to guide the magnet 110, 150 (either permanent magnet 110 or the electromagnet 150) when the magnet 110, 150 is repelled by the plugnut 55. In an embodiment, the guiding arrangement 120 includes a container 120 mounted on the plugnut 55. The magnet 110, 150 is disposed in the container 120. In an embodiment, the container 120 has a transparent body. The material of the container 120 is non-magnetic in nature.

Although the present disclosure is described with reference to the container 120, any other suitable guiding arrangement is well within the scope and ambit of the present disclosure.

The magnet 110, 150 is disposed in the container 120 such that an initial gap GMd is defined between the magnet 110, 150 and the plugnut 55 in the de-actuated state. Thus, when the electric coil 60 is de-energized, the magnet 110, 150 does not cling to the plugnut 55 through the container 120. This allows quick repulsion of the magnet 110, 150 when the electric coil 60 is energized.

Further, the apparatus 100 comprises a biasing member 190 disposed in the container 120 such that one end of the biasing member 190 is attached to an operative inner surface of the container 120, and the other end is attached to a side of the magnet 110, 150. The biasing member 190 facilitates travel of the magnet 110, 150 towards the plugnut 55 when the electric coil 60 is de-energized. More specifically, the biasing member 190 allows quick return of the magnet 110, 150 to its original position when the electric coil 60 is de-energized. Further, due to the biasing member 190, the apparatus 100 and the valve 52 can be operated in any orientation.

In one embodiment, the biasing member 190 is a spring.

The indication unit 130, 155 is configured to be actuated by the displacement of the magnet 110, 150 to indicate actuation of the actuation unit 50 and the device 52. The indication unit 130, 155 is configured to identify displacement of the magnet 110, 150. The indication unit 130, 155 is further configured to provide a visual indication to indicate the actuation of the device 52.

In an embodiment, as shown in Figure 1, Figure 2, Figure 3, and Figure 4, the indication unit 130 includes a rigid rod 130 attached to the magnet 110, 150. The rigid rod is configured to be displaced with the magnet 110, 150 to indicate the actuation of the device 52. The container 120 has a hole 125 configured on an operative top portion thereof to facilitate extension of the rod 130 beyond the container 120 when the rod 130 is displaced under the influence of the magnet 110, 150.

More specifically, when the actuation unit 50 is actuated, the electric coil 60 induces magnetic field in the plugnut 55. At the same time, the polarity of the side 112, 152 of the magnet 110, 150 is same as the polarity induced in the side 57 of the plugnut 55. Due to this, repulsive force is developed between the plugnut 55 and the magnet 110, 150, which results in repulsion of the magnet 110, 150 by the plugnut 55. As the rigid rod 130 is connected to the magnet 110,150, the rigid rod 130 also gets displaced with the magnet 110, 150 away from the plugnut 55, and extends outwardly from the container 120, thereby giving a visual indication when the actuation unit 50 and the device 52 is actuated. The dimensions of the rod 130 are determined such that the extension of the rod 130 beyond the container 120 can be easily observed with naked eyes.

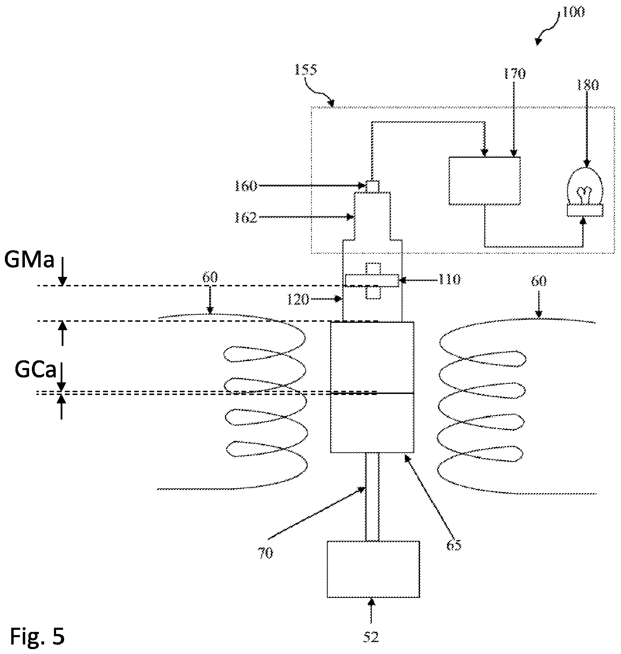

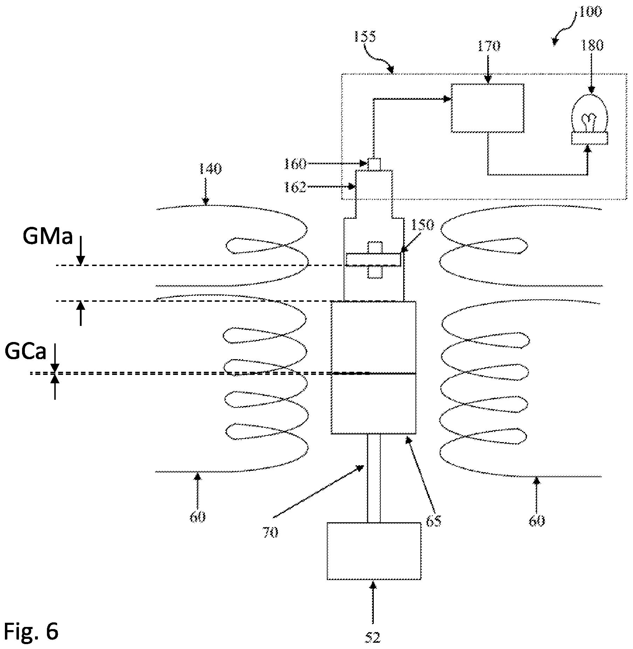

In another embodiment, as shown in Figure 5 and Figure 6, the indication unit 155 includes a Hall sensor 160, a controller 170, and a lamp 180.

The Hall sensor 160 is configured to sense the displaced of the magnet 110, 150. The Hall sensor 160 is further configured to generate and transmit a sensed signal corresponding to the sensed displacement of the magnet 110, 150.

The Hall sensor 160 is arranged on the actuation unit 50 such that the displacement of the magnet 110, 150 can be sensed by the Hall sensor 160. In an embodiment, the Hall sensor 160 is secured in a housing 162 arranged on an operative top surface of the container 120.

The controller 170 is in communication with the Hall sensor 160, and is configured to receive the sensed signal from the Hall sensor 160. The controller 170 is further configured to generate an actuation signal to energize the lamp 180. In an embodiment, the lamp 180 is an LED lamp. Although the present disclosure is elaborated with reference to the lamp 180, any other visual indicator, that can be operated using the controller 170, is well within the scope and ambit of the present disclosure.

The indication unit 155 can be used for both the permanent magnet 110 as well as for the electromagnet 150.

When the actuation unit 50 is actuated, the magnet 110, 150 is repelled by the plugnut 55. The mechanism of repulsion of the magnet 110, 150 is already described in previous paragraphs, and hence, is not repeated here for the sake of the brevity of the disclosure. Once, the magnet 110, 150 is displaced away from the plugnut 55, the Hall sensor 160 senses the displacement, and transmits a sensed signal corresponding to the displacement to the controller 170. Further, the controller 170 receives the sensed signal and transmits the actuation signal to energize the lamp 180. The actuation of the lamp 180 provides a visual indication regarding actuation of the actuation unit 50 and the valve 52.

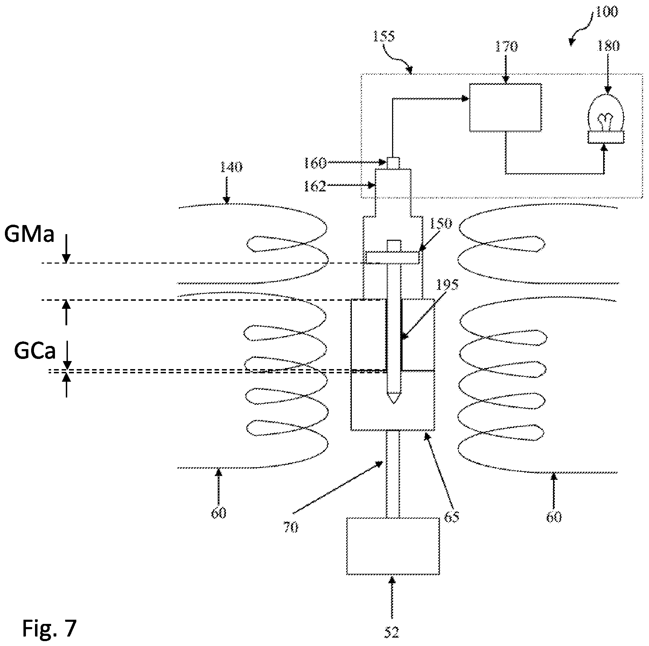

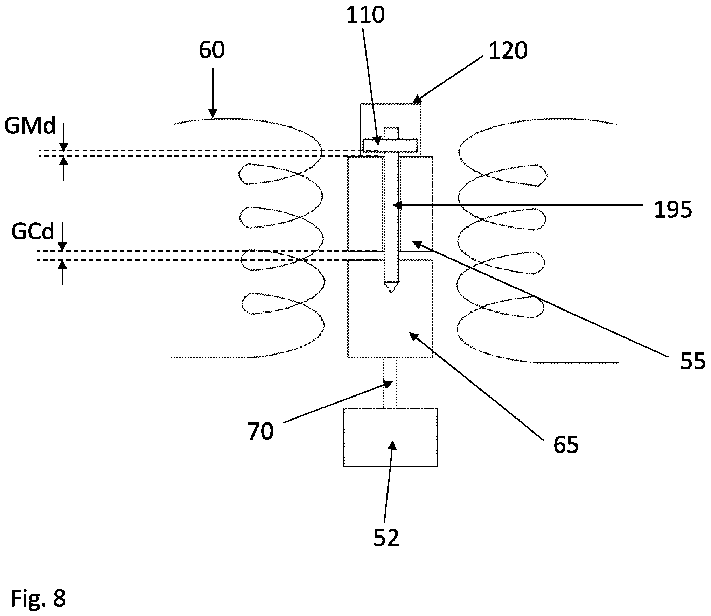

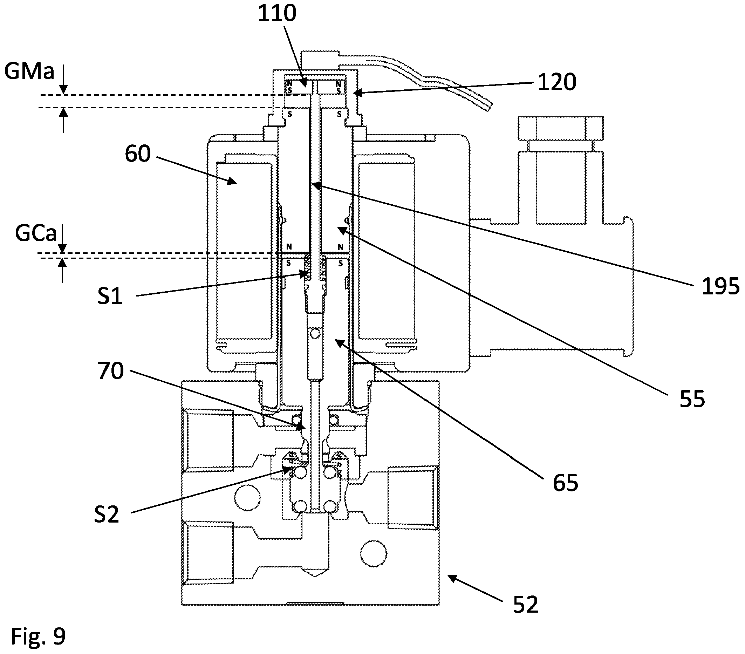

Figure 7, 8 and 9 illustrates other embodiments of the apparatus 100. As shown in Figure 7, 8 and 9 the apparatus includes a connecting member 195. The connecting member 195 is configured to couple the magnet 110, 150 and the core 65. Further, the connecting member 195 passes through the plugnut 55 while coupling the magnet 110, 150 and the core 65. Similar arrangement of the connecting member 195 can also be used to couple the permanent magnet 110 and the core 65 (see Figure 8 and 9). In an embodiment, the connecting member is a rigid rod. As the magnet 110, 150 is connected to the core 65, the travel of the magnet 110, 150 is equal to the travel of the core 65 when the actuation unit 50 is actuated. In a de-actuated state of the actuation unit 50, the magnet 110, 150 is readily pulled towards the plugnut 55 due to the connecting member 195.

The displacement of the magnet 110, 150 (which is connected to the core 65 via the connecting member 195) can be detected by indication unit 130, i.e., by observing the displacement of the rigid rod 130 connected to the magnet 110, 150. If travel of the magnet 110, 150 is very small, the indication unit 155, i.e. arrangement of Hall sensor 160 (as shown in Figure 7), is used to detect the displacement of the magnet 110, 150.

In the Figure 8 and 9 embodiment, the apparatus comprises a stem of non-magnetic material as rigid connecting member 195 that operatively couples a permanent magnet 110 with the core 65 in such a way that as soon as the coil 60 is energized and thus the plugnut 55 is magnetized, a simultaneous attraction of the core 65 towards the plugnut 55 and repelling of the permanent magnet 110 away from the plugnut 55 shall take place. For this the stem 195 extends freely movable back and forth in the axial direction through the plugnut 55. Thus an upwards travel stroke of the core 65 is fully equal to the upwards travel stroke of the magnet 110 when the coil 60 is energized. This gives a good indication of the actuation of the device 52. As an additional advantage a substantial increase in pulling force on the core 65 can thus be obtained. The attraction force F1 on the core 65 and the repulsive force F2 on the permanent magnet 110 act in the same coaxial direction and thus strengthen each other, resulting in additional pull on the core 65. This may in particular be advantageous because the repelling force F2 can already be at its maximum when the magnet 110 is still closest to the magnetized plugnut 55 and from thereon shall decrease in strength when it starts moving away from the plugnut 55, whereas the attraction force F1 on the contrary shall be at its minimum when the core 65 is still furthest away from the magnetized plugnut 55 and from thereon shall increase in strength when it starts moving towards the plugnut 55.

When de-energized again, that is to say in a de-actuated state of the actuation unit 50, the plugnut 55 gets de-magnetized and the permanent magnet 110 shall no longer be repelled but instead be forced to be readily pulled back to its initial de-actuated starting position because of the core 65 no longer being attracted but instead be forced to be readily moved back to its initial de-actuated starting position. For this use can be made of a spring biasing force and/or gravitational weight force. This biasing force can be caused by a spring that is provided in the indication unit 155 and/or in the actuation unit 50 and/or in the device 52. In Figure 9 a return spring S1 is provided inside the actuation unit 50 where it acts between the movable core 65 and the fixed plugnut 55, while also a return spring S2 is provided inside the device 52 that there is formed by a direct operating valve.

The apparatus 100 has a simple configuration, and is easy to operate. Further, the apparatus 100 does not hamper the device, more specifically, the device or valve performance. The apparatus 100 provides visual indications about actuation of the device. Thus, even an unskilled labour can identify actuation of the device. The apparatus 100 has a frictionless operation. Thus, it does not create any noise during operation. Further, the apparatus 100 is a non-contact type apparatus.

The foregoing description of the embodiments has been provided for purposes of illustration and not intended to limit the scope of the present disclosure. Individual components of a particular embodiment are generally not limited to that particular embodiment, but, are interchangeable. Such variations are not to be regarded as a departure from the present disclosure, and all such modifications are considered to be within the scope of the present disclosure.

### TECHNICAL ADVANCEMENTS

The present disclosure described herein above has several technical advantages including, but not limited to, the realization of an apparatus that:
- indicates actuation of a magnetically actuated device;
- does not affect device performance;
- has frictionless operation;
- provides visual indications for indicating actuation of a magnetically actuated device;
- provides amplified visual indication about actuation of the device; and
- is a non-contact type apparatus.

The foregoing disclosure has been described with reference to the accompanying embodiments which do not limit the scope and ambit of the disclosure. The description provided is purely by way of example and illustration.

The embodiments herein and the various features and advantageous details thereof are explained with reference to the non-limiting embodiments in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

It is noted that the idea of having a connecting member couple a permanent magnet or electromagnet on one side of a fixed plugnut of an actuation unit with a movable core on the other side of the fixed plugnut, can also already be advantageously used in practice without the permanent magnet or electromagnet having to form part of an indication unit for perform an indication function of the core movements. This then may result in an assembly comprising a magnetically actuated device, a magnetic actuation unit for actuating the device, and an apparatus for enhancing the magnetic actuation unit, wherein the magnetic actuation unit comprises a controllably displaceable stem configured to actuate or de-actuate the device, a core connected to the stem, a plugnut cooperating with the core, and an electric coil configured to induce a magnetic field in the plugnut to control displacement of the stem, thereby controlling actuation or de-actuation of the device, wherein the apparatus comprises a magnet at an opposing side of the plugnut that is coupled to the core by a connecting member, and wherein a side of the magnet has same polarity as the polarity of a side of the plugnut facing the side of the magnet when the magnetic field is induced in the plugnut. Then also the repulsive force between the magnet and the plugnut and the attraction force between the core and the plugnut are well able to act in the same coaxial direction when the coil of the actuation unit is energized, resulting in the advantageous enhanced pulling force, which may help to overcome any frictional forces and which may help the core to instantly move towards the plugnut.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

The use of the expression "at least" or "at least one" suggests the use of one or more elements or ingredients or quantities, as the use may be in the embodiment of the disclosure to achieve one or more of the desired objects or results.

Any discussion of documents, acts, materials, devices, articles or the like that has been included in this specification is solely for the purpose of providing a context for the disclosure. It is not to be taken as an admission that any or all of these matters form a part of the prior art base or were common general knowledge in the field relevant to the disclosure as it existed anywhere before the priority date of this application.

The numerical values mentioned for the various physical parameters, dimensions or quantities are only approximations.

While considerable emphasis has been placed herein on the components and component parts of the preferred embodiments, it will be appreciated that many embodiments can be made and that many changes can be made in the preferred embodiments without departing from the scope of the invention as defined by the appended claims. These and other changes in the preferred embodiment as well as other embodiments of the disclosure will be apparent to those skilled in the art from the disclosure herein, whereby it is to be distinctly understood that the foregoing descriptive matter is to be interpreted merely as illustrative of the disclosure and not as a limitation.

### LIST OF REFERENCE NUMERALS

- 50 -: Actuation unit
- 52 -: Device, Valve
- 55 -: Plugnut
- 56, 57 -: Sides of plugnut
- 60 -: Electric coil
- 62 -: Side of core
- 65 -: Core
- 70 -: Stem
- 100 -: Apparatus
- 110 -: Permanent magnet
- 112 -: Side of permanent magnet
- 120 -: Container
- 125 -: Hole
- 130, 155 -: Indication unit
- 140 -: Electric coil
- 150 -: Electromagnet
- 152 -: Side of electromagnet
- 160 -: Hall sensor
- 162 -: Housing
- 170 -: Controller
- 180 -: Lamp
- 190 -: Biasing member
- 195 -: Connecting member

## Claims

1. An apparatus (100) for indicating actuation or de-actuation of a magnetically actuated device (52), said device (52) actuated by a magnetic actuation unit (50) comprising:
- a controllably displaceable stem (70) configured to actuate or de-actuate said device (52);
- a core (65) connected to said stem (70);
- a plugnut (55) cooperating with said core (65); and
- an electric coil (60) configured to induce a magnetic field in said plugnut (55) to control displacement of said stem (70), thereby controlling actuation or de-actuation of said device (52),
said apparatus (100) comprising:
- an indicating magnet (110, 150) configured to be displaced in relation to the movement of said core (65); and
- an indication unit (130, 155) configured to be actuated by the displacement of said indicating magnet (110, 150) to indicate actuation or de-actuation of said actuation unit (50) and said device (52),
**characterized in that,**
the indicating magnet (110, 150) is associated with said plugnut (55) and is configured to, when the actuation unit (50) is actuated, and the electric coil (60) induces the magnetic field in the plugnut (55), at the same time, have the polarity of a side (112, 152) of the indicating magnet (110, 150) being the same as the polarity induced in a side (57) of the plugnut (55) facing the side (112, 152) of the indicating magnet (110, 150), due to which repulsive force is developed between the plugnut (55) and the indicating magnet (110, 150), which results in repulsion of the indicating magnet (110, 150) by the plugnut (55).

2. The apparatus (100) as claimed in claim 1, which includes a guiding arrangement (120) configured to guide said indicating magnet (110, 150) when said indicating magnet (110, 150) is displaced.

3. The apparatus (100) as claimed in claim 2, wherein said guiding arrangement (120) includes a container (120) mounted on said plugnut (55), and said indicating magnet (110, 150) is disposed in said container (120).

4. The apparatus (100) as claimed in claim 3, wherein said container (120) has a hole (125) configured thereon.

5. The apparatus (100) as claimed in claim 3 or 4, wherein said container (120) has a transparent body.

6. The apparatus (100) as claimed in one of the preceding claims 3-5, which includes a biasing member (190) attached to an operative inner surface of said container (120) and to said indicating magnet (110, 150).

7. The apparatus (100) as claimed in one of the preceding claims 1-6, wherein said indicating magnet (110) is a permanent magnet (110), and a side (112) of said permanent magnet (110) has said same polarity as the polarity of said side (57) of said plugnut (55) facing said side (112) of said permanent magnet (110) when the magnetic field is induced in said plugnut (55).

8. The apparatus (100) as claimed in one of the preceding claims 1-6, wherein said indicating magnet (150) is an electromagnet (150).

9. The apparatus (100) as claimed in claim 8, which includes an electric coil (140) configured to induce magnetic field in said electromagnet (150) when energized, wherein a side (152) of said electromagnet (150) has said same polarity as the polarity of said side (57) of said plugnut (55) facing said side (152) of said electromagnet when said plugnut (55) and said electromagnet (150) are energized.

10. The apparatus (100) as claimed in one of the preceding claims, wherein said indication unit (130) includes a rigid rod (130) attached to said indicating magnet (110, 150), and said rigid rod (130) is configured to be displaced with said indicating magnet (110, 150) to indicate actuation or de-actuation of said actuation unit (50) and said device (52).

11. The apparatus (100) as claimed in one of the preceding claims, wherein a gap is defined between said indicating magnet (110, 150) and said plugnut (55).

12. The apparatus (100) as claimed in one of the preceding claims, wherein said indication unit (155) includes:
- a sensor, in particular a Hall sensor (160), configured to sense the displacement of said indicating magnet (110, 150), said sensor (160) further configured to generate and transmit a sensed signal corresponding to sensed displacement of said indicating magnet (110, 150); and
- a controller (170) configured to receive said sensed signal, and generate an actuation signal to energize a lamp (180).

13. The apparatus (100) as claimed in one of the preceding claims, wherein said indicating magnet (110, 150) and said core (65) are arranged at opposite sides of said plugnut (55), and/or
wherein the indicating magnet (110, 150) is selected such that a gauss value or a magnetic strength of the indicating magnet (110, 150) is lesser than that of the plugnut (55) when the electric coil (60) is energized, such that displacement of said indicating magnet (110, 150) is more than the displacement of said core (65), more specifically, such that the distance travelled by the indicating magnet (110, 150) is more than the distance travelled by the core (65) towards the plugnut (55), and/or
which includes a connecting member (195) configured to couple said indicating magnet (110, 150) and said core (65).

14. An assembly comprising:
- a magnetically actuated device (52);
- a magnetic actuation unit (5) for actuating said device (52); and
- an apparatus (100) according to one of the preceding claims 1-13 for indicating actuation or de-actuation of the magnetically actuated device (52),
wherein the magnetic actuation unit (50) comprising:
- a controllably displaceable stem (70) configured to actuate or de-actuate said device (52);
- a core (65) connected to said stem (70);
- a plugnut (55) cooperating with said core (65); and
- an electric coil configured to induce a magnetic field in said plugnut (55) to control displacement of said stem (70), thereby controlling actuation or de-actuation of said device (52),
in particular wherein the device (52) is a magnetically actuated valve or a magnetically actuated switch,
more in particular wherein the valve or switch is connected to the stem (70), and wherein the stem (70) is configured to actuate or de-actuate the valve or switch.

15. Method for indicating actuation or de-actuation of the magnetically actuated device (52) of the assembly according to claim 14, comprising the steps:
- controlling actuation or de-actuation of said device (52) by the electric coil (60) of the magnetic actuation unit (50) inducing a magnetic field in said plugnut (55) to control displacement of said core (65) and stem (70),
- displacing the indicating magnet (110, 150) of the apparatus (100) in relation to the movement of said core (65) and stem (70), and
- actuating the indication unit (130, 155) by the displacement of said indicating magnet (110, 150) to indicate actuation or de-actuation of said actuation unit (50) and said device (52),
**characterized in that,**
when the actuation unit (50) is actuated, and the electric coil (60) induces the magnetic field in the plugnut (55), at the same time, the polarity of a side (112, 152) of the indicating magnet (110, 150) is the same as the polarity induced in a side (57) of the plugnut (55) facing the side (112, 152) of the indicating magnet (110, 150), due to which repulsive force is developed between the plugnut (55) and the indicating magnet (110, 150), which results in repulsion of the indicating magnet (110, 150) by the plugnut (55).

## Patentansprüche

1. Vorrichtung (100) zum Anzeigen einer Aktivierung oder einer Deaktivierung einer magnetisch aktivierten Einrichtung (52), wobei die Einrichtung (52), die durch eine Magnetaktivierungseinheit (50) aktiviert wird, umfasst:
- einen steuerbar versetzbaren Schaft (70), der konfiguriert ist, die Einrichtung (52) zu aktivieren oder zu deaktivieren;
- einen Kern (65), der mit dem Schaft (70) verbunden ist;
- eine Steckmutter (55), die mit dem Kern (65) zusammenwirkt; und
- eine elektrische Spule (60), die konfiguriert ist, ein Magnetfeld in der Steckmutter (55) zu induzieren, um die Verlagerung des Schafts (70) zu steuern, wodurch die Aktivierung oder die Deaktivierung der Einrichtung (52) gesteuert wird,
wobei die Vorrichtung (100) Folgendes umfasst:
- einen Anzeigemagneten (110, 150), der konfiguriert ist, in Bezug auf die Bewegung des Kerns (65) verlagert zu werden; und
- eine Anzeigeeinheit (130, 155), die konfiguriert ist, durch die Verlagerung des Anzeigemagneten (110, 150) aktiviert zu werden, um eine Aktivierung oder eine Deaktivierung der Aktivierungseinheit (50) und der Einrichtung (52) anzugeben,
**dadurch gekennzeichnet, dass**
der Anzeigemagnet (110, 150) der Steckmutter (55) zugeordnet ist und konfiguriert ist, dann, wenn die Aktivierungseinheit (50) aktiviert ist und die elektrische Spule (60) das Magnetfeld in der Steckmutter (55) induziert, gleichzeitig die Polarität einer Seite (112, 152) des Anzeigemagneten (110, 150) gleich der Polarität zu gestalten die in einer Seite (57) der Steckmutter (55), die der Seite (112, 152) des Anzeigemagneten (110, 150) zugewandt ist, induziert wird, wodurch eine abstoßende Kraft zwischen der Steckmutter (55) und dem Anzeigemagneten (110, 150) entsteht, was in einer Abstoßung des Anzeigemagneten (110, 150) durch die Steckmutter (55) resultiert.

2. Vorrichtung (100) nach Anspruch 1, die eine Führungsanordnung (120) enthält, die konfiguriert ist, den Anzeigemagneten (110, 150) zu führen, wenn der Anzeigemagnet (110, 150) verlagert wird.

3. Vorrichtung (100) nach Anspruch 2, wobei die Führungsanordnung (120) einen Behälter (120), der an der Steckmutter (55) montiert ist, enthält und der Anzeigemagnet (110, 150) im Behälter (120) angeordnet ist.

4. Vorrichtung (100) nach Anspruch 3, wobei der Behälter (120) ein Loch (125) besitzt, das darin konfiguriert ist.

5. Vorrichtung (100) nach Anspruch 3 oder 4, wobei der Behälter (120) einen durchsichtigen Körper besitzt.

6. Vorrichtung (100) nach einem der vorhergehenden Ansprüche 3-5, die ein Vorbelastungselement (190) enthält, das an einer wirkenden Innenoberfläche des Behälters (120) und am Anzeigemagneten (110, 150) angebracht ist.

7. Vorrichtung (100) nach einem der vorhergehenden Ansprüche 1-6, wobei der Anzeigemagnet (110) ein Permanentmagnet (110) ist und eine Seite (112) des Permanentmagneten (110) dieselbe Polarität besitzt wie die Polarität der Seite (57) der Steckmutter (55), die der Seite (112) des Permanentmagneten (110) zugewandt ist, wenn das Magnetfeld in der Steckmutter (55) induziert wird.

8. Vorrichtung (100) nach einem der vorhergehenden Ansprüche 1-6, wobei der Anzeigemagnet (150) ein Elektromagnet (150) ist.

9. Vorrichtung (100) nach Anspruch 8, die eine elektrische Spule (140) enthält, die konfiguriert ist, ein Magnetfeld im Elektromagneten (150) zu induzieren, wenn sie eingeschaltet ist, wobei eine Seite (152) des Elektromagneten (150) dieselbe Polarität besitzt wie die Polarität der Seite (57) der Steckmutter (55), die der Seite (152) des Elektromagneten zugewandt ist, wenn die Steckmutter (55) und der Elektromagnet (150) eingeschaltet sind.

10. Vorrichtung (100) nach einem der vorhergehenden Ansprüche, wobei die Anzeigeeinheit (130) einen starren Stab (130) enthält, der am Anzeigemagneten (110, 150) angebracht ist, und der starre Stab (130) derart konfiguriert ist, dass er mit dem Anzeigemagneten (110, 150) verlagert wird, um eine Aktivierung oder eine Deaktivierung der Aktivierungseinheit (50) und der Einrichtung (52) anzugeben.

11. Vorrichtung (100) nach einem der vorhergehenden Ansprüche, wobei eine Lücke zwischen dem Anzeigemagneten (110, 150) und der Steckmutter (55) definiert ist.

12. Vorrichtung (100) nach einem der vorhergehenden Ansprüche, wobei die Anzeigeeinheit (155) Folgendes enthält:
- einen Sensor, insbesondere einen Hallsensor (160), der konfiguriert ist, die Verlagerung des Anzeigemagneten (110, 150) zu erfassen, wobei der Sensor (160) ferner konfiguriert ist, ein erfasstes Signal, das einer erfassten Verlagerung des Anzeigemagneten (110, 150) entspricht, zu erzeugen und zu senden; und
- eine Steuereinheit (170), die konfiguriert ist, das erfasste Signal zu empfangen und ein Stellsignal zu erzeugen, um eine Lampe (180) einzuschalten.

13. Vorrichtung (100) nach einem der vorhergehenden Ansprüche, wobei der Anzeigemagnet (110, 150) und der Kern (65) auf gegenüberliegenden Seiten der Steckmutter (55) angeordnet sind und/oder
der Anzeigemagnet (110, 150) derart gewählt ist, dass ein Gaußwert oder eine Magnetkraft des Anzeigemagneten (110, 150) kleiner als der bzw. die der Steckmutter (55) ist, wenn die elektrische Spule (60) eingeschaltet ist, derart, dass die Verlagerung des Anzeigemagneten (110, 150) größer als die Verlagerung des Kerns (65) ist, insbesondere derart, dass die Entfernung, die durch den Anzeigemagneten (110, 150) zurückgelegt wird, größer als die Entfernung ist, die durch den Kern (65) zur Steckmutter (55) zurückgelegt wird, und/oder
die ein Verbindungselement (195) enthält, das konfiguriert ist, den Anzeigemagneten (110, 150) und den Kern (65) zu koppeln.

14. Anordnung, die umfasst:
- eine magnetisch aktivierte Einrichtung (52);
- eine Magnetaktivierungseinheit (5) zum Aktivieren der Einrichtung (52) und
- eine Vorrichtung (100) nach einem der vorhergehenden Ansprüche 1-13 zum Anzeigen einer Aktivierung oder einer Deaktivierung der magnetisch aktivierten Einrichtung (52),
wobei die Magnetaktivierungseinheit (50) umfasst:
- einen steuerbar versetzbaren Schaft (70), der konfiguriert ist, die Einrichtung (52) zu aktivieren oder zu deaktivieren;
- einen Kern (65), der mit dem Schaft (70) verbunden ist;
- eine Steckmutter (55), die mit dem Kern (65) zusammenwirkt; und
- eine elektrische Spule, die konfiguriert ist, ein Magnetfeld in der Steckmutter (55) zu induzieren, um die Verlagerung des Schafts (70) zu steuern, wodurch die Aktivierung oder die Deaktivierung der Einrichtung (52) gesteuert wird,
insbesondere wobei die Einrichtung (52) ein magnetisch aktiviertes Ventil oder ein magnetisch aktivierter Schalter ist,
ferner insbesondere wobei das Ventil oder der Schalter mit dem Schaft (70) verbunden ist und der Schaft (70) konfiguriert ist, das Ventil oder den Schalter zu aktivieren oder zu deaktivieren.

15. Verfahren zum Anzeigen einer Aktivierung oder einer Deaktivierung der magnetisch aktivierten Einrichtung (52) der Anordnung nach Anspruch 14, das die Schritte umfasst:
- Steuern einer Aktivierung oder einer Deaktivierung der Einrichtung (52) durch die elektrische Spule (60) der Magnetaktivierungseinheit (50), die ein Magnetfeld in der Steckmutter (55) induziert, um die Verlagerung des Kerns (65) und des Schafts (70) zu steuern,
- Verlagern des Anzeigemagneten (110, 150) der Vorrichtung (100) in Bezug auf die Bewegung des Kerns (65) und des Schafts (70), und
- Aktivieren der Anzeigeeinheit (130, 155) durch die Verlagerung des Anzeigemagneten (110, 150), um eine Aktivierung oder eine Deaktivierung der Aktivierungseinheit (50) und der Einrichtung (52) anzugeben,
**dadurch gekennzeichnet, dass**
dann, wenn die Aktivierungseinheit (50) aktiviert ist und die elektrische Spule (60) das Magnetfeld in der Steckmutter (55) induziert, gleichzeitig die Polarität einer Seite (112, 152) des Anzeigemagneten (110, 150) gleich der Polarität ist, die in einer Seite (57) der Steckmutter (55), die der Seite (112, 152) des Anzeigemagneten (110, 150) zugewandt ist, induziert wird, wodurch eine abstoßende Kraft zwischen der Steckmutter (55) und dem Anzeigemagneten (110, 150) entsteht, was in einer Abstoßung des Anzeigemagneten (110, 150) durch die Steckmutter (55) resultiert.

## Revendications

1. Appareil (100) destiné à indiquer l'activation ou la désactivation d'un dispositif à activation magnétique (52), ledit dispositif (52) activé par une unité d'activation magnétique (50) comprenant :
- une tige à déplacement commandé (70) conçue pour activer ou désactiver ledit dispositif (52) ;
- un noyau (65) relié à ladite tige (70) ;
- un écrou de connexion (55) coopérant avec ledit noyau (65) ; et
- une bobine électrique (60) conçue pour induire un champ magnétique dans ledit écrou de connexion (55) pour commander le déplacement de ladite tige (70), ce qui permet de commander l'activation ou la désactivation dudit dispositif (52),
ledit appareil (100) comprenant :
- un aimant d'indication (110, 150) conçu pour être déplacé en relation avec le mouvement dudit noyau (65) ; et
- une unité d'indication (130, 155) conçue pour être activée par le déplacement dudit aimant d'indication (110, 150) pour indiquer l'activation ou la désactivation de ladite unité d'activation (50) et dudit dispositif (52),
**caractérisé en ce que**
l'aimant d'indication (110, 150) est associé audit écrou de connexion (55) et est conçu pour, lorsque l'unité d'activation (50) est activée, et que la bobine électrique (60) induit le champ magnétique dans l'écrou de connexion (55) en même temps, présenter une polarité d'un côté (112, 152) de l'aimant d'indication (110, 150) identique à la polarité induite dans un côté (57) de l'écrou de connexion (55) qui fait face au côté (112, 152) de l'aimant d'indication (110, 150), grâce à quoi une force de répulsion est développée entre l'écrou de connexion (55) et l'aimant d'indication (110, 150), ce qui entraîne la répulsion de l'aimant d'indication (110, 150) par l'écrou de connexion (55).

2. Appareil (100) selon la revendication 1, comprenant un agencement de guidage (120) conçu pour guider ledit aimant d'indication (110, 150) lorsque ledit aimant d'indication (110, 150) est déplacé.

3. Appareil (100) selon la revendication 2, dans lequel ledit agencement de guidage (120) comprend un récipient (120) monté sur ledit écrou de connexion (55), et ledit aimant d'indication (110, 150) est disposé dans ledit récipient (120).

4. Appareil (100) selon la revendication 3, dans lequel ledit récipient (120) comporte un trou (125) conçu dessus.

5. Appareil (100) selon la revendication 3 ou 4, dans lequel ledit récipient (120) a un corps transparent.

6. Appareil (100) selon l'une quelconque des revendications précédentes 3 à 5, comprenant un organe de polarisation (190) fixé à une surface interne opérationnelle dudit récipient (120) et audit aimant d'indication (110, 150).

7. Appareil (100) selon l'une quelconque des revendications précédentes 1 à 6, dans lequel ledit aimant d'indication (110) est un aimant permanent (110), et un côté (112) dudit aimant permanent (110) présente la même polarité que la polarité dudit côté (57) dudit écrou de connexion (55) qui fait face audit côté (112) dudit aimant permanent (110) lorsque le champ magnétique est induit dans ledit écrou de connexion (55).

8. Appareil (100) selon l'une quelconque des revendications précédentes 1 à 6, dans lequel ledit aimant d'indication (150) est un électro-aimant (150).

9. Appareil (100) selon la revendication 8, comprenant une bobine électrique (140) conçue pour induire un champ magnétique dans ledit électro-aimant (150) lorsqu'elle est mise sous tension, dans lequel un côté (152) dudit électro-aimant (150) présente la même polarité que la polarité dudit côté (57) dudit écrou de connexion (55) qui fait face au côté (152) dudit électro-aimant lorsque ledit écrou de connexion (55) et ledit électro-aimant (150) sont mis sous tension.

10. Appareil (100) selon l'une quelconque des revendications précédentes, dans lequel ladite unité d'indication (130) comprend une aiguille rigide (130) fixée audit aimant d'indication (110, 150), et ladite aiguille rigide (130) est conçue pour être déplacée avec ledit aimant d'indication (110, 150) pour indiquer l'activation ou la désactivation de ladite unité d'activation (50) et dudit dispositif (52).

11. Appareil (100) selon l'une quelconque des revendications précédentes, dans lequel un espace est défini entre ledit aimant d'indication (110, 150) et ledit écrou de connexion (55).

12. Appareil (100) selon l'une quelconque des revendications précédentes, dans lequel ladite unité d'indication (155) comprend :
- un capteur, en particulier un capteur à effet Hall (160), conçu pour détecter le déplacement dudit aimant d'indication (110, 150), ledit capteur (160) étant en outre conçu pour générer et émettre un signal détecté correspondant à un déplacement détecté dudit aimant d'indication (110, 150) ; et
- un contrôleur (170) conçu pour recevoir ledit signal détecté et générer un signal d'activation pour mettre une lampe (180) sous tension.

13. Appareil (100) selon l'une quelconque des revendications précédentes, dans lequel ledit aimant d'indication (110, 150) et ledit noyau (65) sont disposés sur des côtés opposés dudit écrou de connexion (55), et/ou
dans lequel ledit aimant d'indication (110, 150) est sélectionné de sorte qu'une valeur de Gauss ou une résistance magnétique de l'aimant d'indication (1110, 150) soit inférieure à celle de l'écrou de connexion (55) lorsque la bobine électrique (60) est mise sous tension, afin que le déplacement dudit aimant d'indication (110, 150) soit supérieur au déplacement dudit noyau (65), plus spécifiquement afin que la distance parcourue par l'aimant d'indication (110, 150) soit supérieure à la distance parcourue par le noyau (65) en direction de l'écrou de connexion (55), et/ou
comprenant un organe de raccordement (195) conçu pour coupler ledit aimant d'indication (110, 150) et ledit noyau (65).

14. Ensemble comprenant :
- un dispositif à activation magnétique (52) ;
- une unité d'activation magnétique (5) destinée à activer ledit dispositif (52) ; et
- un appareil (100) selon l'une quelconque des revendications précédentes 1 à 13 destiné à indiquer l'activation ou la désactivation du dispositif à activation magnétique (52),
dans lequel l'unité d'activation magnétique (50) comprend :
- une tige à déplacement commandé (70) conçue pour activer ou désactiver ledit dispositif (52) ;
- un noyau (65) relié à ladite tige (70) ;
- un écrou de connexion (55) coopérant avec ledit noyau (65) ; et
- une bobine électrique (60) conçue pour induire un champ magnétique dans ledit écrou de connexion (55) pour commander le déplacement de ladite tige (70), ce qui permet de commander l'activation ou la désactivation dudit dispositif (52),
en particulier dans lequel le dispositif (52) est une soupape à activation magnétique ou un commutateur à activation magnétique,
en particulier de plus dans lequel la soupape ou le commutateur est relié(e) à la tige (70), et dans lequel la tige (70) est conçue pour activer ou désactiver la soupape ou le commutateur.

15. Procédé d'indication de l'activation ou de la désactivation du dispositif à activation magnétique (52) de l'ensemble selon la revendication 14, comprenant les étapes suivantes :
- la commande de l'activation ou de la désactivation dudit dispositif (52) par la bobine électrique (60) de l'unité d'activation magnétique (50) induisant un champ magnétique dans ledit écrou de connexion (55) pour commander le déplacement dudit noyau (65) et de ladite tige (70),
- le déplacement de l'aimant d'indication (110, 150) de l'appareil (100) en relation avec le mouvement dudit noyau (65) et de ladite tige (70), et
- l'activation de l'unité d'indication (130, 155) par le déplacement dudit aimant d'indication (110, 150) pour indiquer l'activation ou la désactivation de ladite unité d'activation (50) et dudit dispositif (52),
**caractérisé en ce que**
lorsque l'unité d'activation (50) est activée, et que la bobine électrique (60) induit le champ magnétique dans l'écrou de connexion (55) en même temps, la polarité d'un côté (112, 152) de l'aimant d'indication (110, 150) est identique à la polarité induite dans un côté (57) de l'écrou de connexion (55) qui fait face au côté (112, 152) de l'aimant d'indication (110, 150), grâce à quoi une force de répulsion est développée entre l'écrou de connexion (55) et l'aimant d'indication (110, 150), ce qui entraîne la répulsion de l'aimant d'indication (110, 150) par l'écrou de connexion (55).
